# EUROPEAN PATENT SPECIFICATION

(11) **EP 0 414 340 B1**
(45) Date of publication and mention of the grant of the patent: **02.03.1994**
(21) Application number: 90305518.4
(22) Date of filing: 22.05.1990
(51) Int. Cl.: F22B 37/00, B23D 45/02, B23Q 9/00

(54) **Boiler tube cutting apparatus**
Vorrichtung zum Schneiden von Kesselrohren
Appareil pour couper des tubes de chaudières

(30) Priority: 25.08.1989 US 398625
(43) Date of publication of application: 27.02.1991
(73) Proprietor: Hillestad, Tollief O., Summerland Key Florida 33042 (US); Hillestad, Mark W., Wadsworth Ohio 44281 (US)
(72) Inventor: Hillestad, Tollief O., Summerland Key Florida 33042 (US); Hillestad, Mark W., Wadsworth Ohio 44281 (US)
(74) Representative: Spall, Christopher John

(56) References cited:
- DE-C- 407 735
- US-A- 3 722 497
- US-A- 4 599 774
- US-A- 4 633 555
- US-A- 4 739 688

## Description

The present invention relates to a boiler tube cutting apparatus operative to progressively and adjacently move in a linear direction as at a transverse angle to a bank of parallel boiler tubes while cutting the same

### BACKGROUND OF THE INVENTION

Industrial plants, such as power stations, utilize large quantities of steam generated in boiler systems known as steam generators. Typically banks of vertically disposed parallel boiler tubes are arranged inside a heated chamber where hot water, steam, or mixtures thereof pass through the boiler tubes. Due to constant use, the boiler tubes become rusted, worn, deteriorated, etc., and otherwise fail thus necessitating frequent replacement of the boiler tubes. Such boiler tubes must be removed and ordinarily an entire bank of boiler tubes are cut from their mountings with a carbide saw or abrasive disk. However, the cutting blades or disks fail quite rapidly due to the heavy cutting load as well as highly undesirable load strains, vibrations, bending moments, etc., generated during the cutting process. In the past, boiler tubes were cut by cutting wheels or blades driven by electrical or hydraulic motors, but hydraulic motors are generally inadequate due to dirty environments, e.g. dust, dirt, etc., which foul the motor and cause the same to break down while electric motors generally fail due to coil and/or armature burnout. Supporting mechanisms for holding the motor activated cutting devices lacked rigidity and created highly undesirable strains, vibrations, etc., such as undue flexing thereby causing rapid destruction of the cutting blade or disk. This is, due to free play, slop, lack of rigidity, etc. of the prior art devices, the cutting disk did not rotate within a plane since the portion cutting the tubes undergoes rapid flexing which causes damage and ruin of the cutting disk. In practice, the cutting saw or disk would fracture or otherwise fail after cutting only four or five boiler tubes, which resulted in a costly and very time consuming process.

### SUMMARY OF THE INVENTION

It now has been found that a boiler tube cutting apparatus can be effectively stabilized against strains, etc., by mounting a cutting means on a movable carriage adapted to move linearly at a controlled rate on a lateral support beam secured adjacently to the bank of boiler tubes.

It is known from US 4 633 555 to provide a tube cutting apparatus comprising a platform slidably mounted to a pair of spaced parallel guide rods which are secured to a web by parallel flanges. The major surface of the web is arranged vertically with the platform being supported from the side of the web by rods secured to the rods by the parallel flanges. In this arrangement the weight of the platform on which the cutting means are mounted and the cutting means themselves impose a substantial torsional moment about the web which may lead to distortion of the web and binding or poor tracking of the platform on the guide rods.

To prevent binding of the moveable platform, the tubular grooves of the mounts through which the rods pass may be provided with a substantially larger diameter than that of the rods. However, increasing the tolerance between the rods and the grooves also increases the amount of free play and reduces rigidity resulting in undesirable vibrations and flexing.

In the present invention, the movable carriage is stabilized against vertical and transverse vibrations by bearing means securely engaging the lateral support beam while the cutting means cuts the boiler tubes at a desired angle such as a right angle to the axial direction of the boiler tubes. Stabilizing the movable carriage relative to the lateral support beam effectively eliminates undesirable strain and vibration, and the like, from being generated in the cutting means which in turn substantially prolongs the useful life of the cutting wheel or disk since it rotates in a plane free of flexing, strain, etc. In contrast to the prior art device to fail after cutting only four or five boiler tubes, the boiler tube cutting apparatus of this invention can effectively cut numerous, e.g., more than 60 boiler tubes without failure of the cutting wheel or disk. Efficiency is substantially increased due to negligible down-time to replace broken cutting wheels or disks while equipment costs are reduced considerably since fewer cutting wheels or disks are required.

The boiler tube cutting apparatus of the present invention comprises a movable cutting means operative to move in a lateral direction and adjacent to a bank of parallel boiler tubes where the cutting means is stabilized against undesirable strain while cutting the boiler tubes at an angle generally transverse to the axial direction of the boiler tubes. The cutting means is supported by a movable carriage supported by a lateral support beam secured adjacent to the bank of boiler tubes. Lateral movement of the carriage is preferably controlled by a rack and pinion gear means operative to advance the carriage along the lateral supporting beam while the carriage securely and positively tracks the supporting beam whereby the carriage and cutting means is stabilized against undesirable strain, vibration, etc. The preferred power for operating the cutting means is a pneumatic motor.

These and other advantages of the present invention will become more apparent by referring to the drawings and the detailed description of the invention.

### BRIEF DESCRIPTION OF THE DRAWINGS

Fig. 1 is a front elevational view of the boiler tube cutting apparatus of the present invention secured adjacently to a bank of boiler tubes for cutting of the vertical boiler tubes;
Fig. 2 is a side elevational view of the boiler tube cutting apparatus shown in Fig. 1;
Fig. 3 is a top plan view of the boiler tube cutting apparatus of Fig. 1 and shown in the operational mode of cutting boiler tubes; and
Fig. 4 is a horizontal sectional view taken along lines 4-4 in Fig. 2.

### DETAILED DESCRIPTION OF THE INVENTION

Referring to the drawings, a boiler tube cutting apparatus generally indicated by the numeral 10 comprises a power activated cutting means 12 mounted on a movable carriage generally indicated by the number 14 adapted to move laterally and track a lateral supporting beam 16 secured adjacently to a bank of boiler tubes 18.

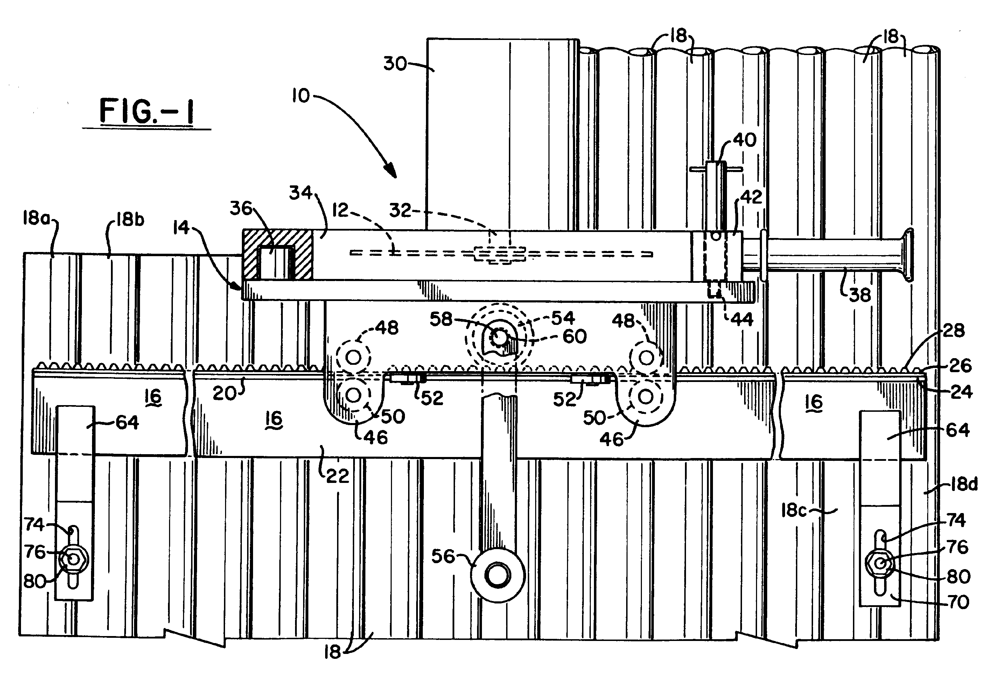

Referring first to the lateral supporting beam 16, the beam 16 is generally secured in front of and adjacent to the bank of boiler tubes 18 by welding or otherwise securing beam 16 to a pair of distal end boiler tubes 18a,18b, and 18c,18d, as shown in Fig. 1, or by securing to a surrounding support structure located adjacent to the bank of boiler tubes 18. The lateral support beam 16 preferably comprises a T-shape cross-section having an upper longitudinal flat flange plate 20 integral or secured to a centered downwardly extending vertical support 22. The upper flange 20 comprises an upper flat surface and a lower flat surface which define intervening front and rear lateral side edges 24, of flange 20 in the elongated dimension of beam 16. Secured to the upper surface of upper flange 20 is a centered linear rack gear 26 containing raised spaced rock teeth 28. The lateral support beam 16 is adapted to support movable carriage 14 and cutting means 12 in accordance with this invention as hereinafter described.

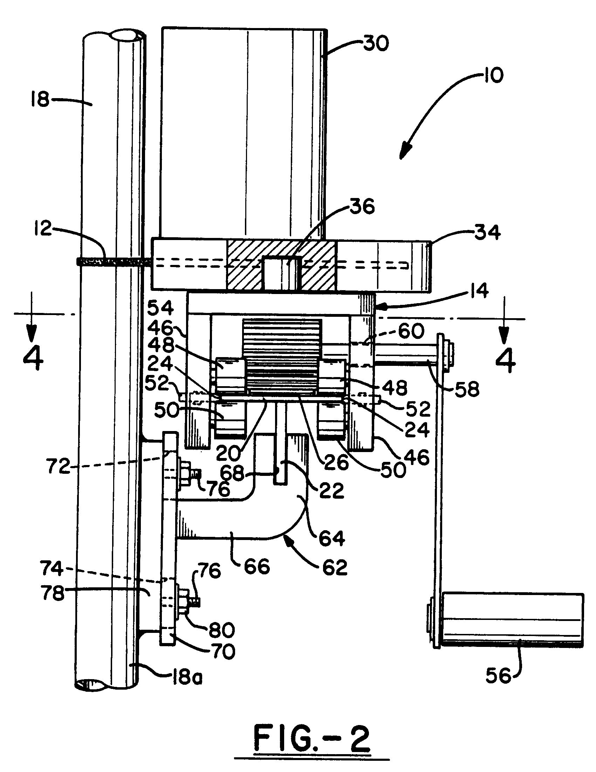

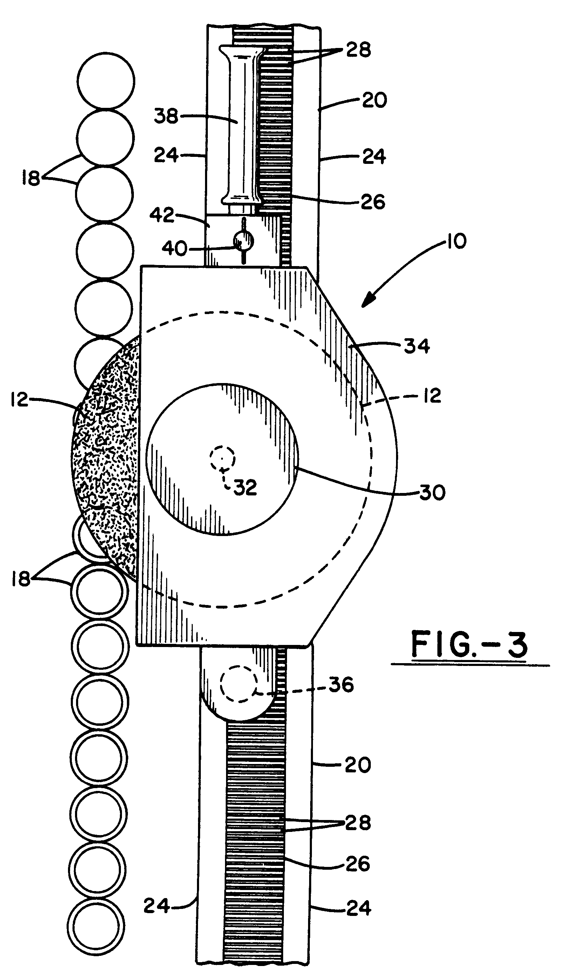

The cutting means 12 is operatively actuated by a power source such as motor 30 to drive cutting means 12 secured to the distal end of an interconnecting depending drive shaft 32. The preferred motor 30 is a pneumatic motor typically comprising a multiple vane air driven motor and powered by compressed air ordinarily available in industrial plants. A satisfactory pneumatic motor for use in the present invention generates about 3 to about 7 and desirably from about 4.5 to about 5.5 horsepower and about 3,500 to about 6,500 and desirably from about 4,500 to about 5,500 RPM at a standard factory air pressure of about 90 psi. The pneumatic motor 30 is supported by a horizontally disposed, rotatable arm 34 pivotally mounted at 36 to one end of movable carriage 14. The downwardly depending drive shaft 32 passes through an opening in rotatable support arm 34 to operate cutting means 12 in a vertically spaced relationship between supporting arm 34 and movable carriage 14, whereby cutting means 12 is located below rotatable support arm 34 surface but above movable carriage 14 to provide free operation of cutting means 12 within said space. As best seen in Figs. 2 and 3, the rotatable arm 34 contains a lateral opening on the rear side adjacent to the bank of boiler tubes 18 to permit protrusion of the cutting means 16 beyond supporting arm 34 to cut boiler tubes 18. Rotation of supporting arm 34 about pivot 36 can be effected by handle 38 secured to the opposite end of support arm 34. Rotation of support arm 34 to the operative cutting position, best viewed in Fig. 3, can be secured in use by securing a set pin 40 through an intermediate structure 42 securing the handle 38 to the support aim 34 where set pin 40 engages a recess 44 opening located in the upper surface of the movable carriage 14. Thus, the pneumatic motor 30, rotatable supporting arm 34, and cutting means 12 can be rotated as a unit about pivot connection 36 and locked into the operative position by engaging set pin 40 within recess 44. Similarly, the unit can be reversely rotated to the non-operative position away from the bank of boiler tubes by reversing the procedure. In the preferred embodiment, the cutting means 12 is operative in the operating position to cut boiler pipes 18 at a right angle to the axial direction of the boiler pipes, although generally any angle can be utilized. The cutting means 12 can be a carbide wheel or disk or similar hard abrasive cutting wheel containing a peripheral cutting surface. Referring now in more detail to the movable carriage 14, the carriage contains a plurality of downwardly depending bearing supports 46 shown in the drawings to consist of two laterally spaced bearing supports 46 on the front side and two bearing supports 46 on the back side of the carriage 14. Operatively secured to the lower end of each bearing support 46 is an inwardly directed bearing means preferably comprising a pair of vertically spaced wheels consisting of an upper wheel 48 engaging the top surface of upper flange 20 and a lower wheel 50 engaging the lower surface of upper flange 20 of T-shape lateral supporting beam 16. Each inwardly directed bearing means or wheels 48,50 tightly engages the upper and lower surfaces respectively of upper flange 20 of lateral support beam 16 to securely stabilize carriage 14 and cutting means 12 as a unit against vertical vibration and/or strain during the cutting operation. The movable carriage 14 further contains a plurality of downwardly depending side bearing means operatively secured to the lower front and back sides of carriage 14 where each side bearing means consists of a longitudinally mounted tracking wheel 52 adapted to securely engage lateral side edges 24 of flange 20 of lateral support beam 16. Preferably two laterally spaced side bearing wheels 52 are used in each side of carriage 14 where collectively side bearing wheels 52 transversely stabilize carriage 14 and cutting means 12 as a unit against vibration and strain transverse to lateral supporting beam 16 during the cutting operation. Thus, the vertical bearing means 48,50 and side bearing means 52 work in concert to stabilize carriage 14 and cutting means 12 in accordance with this invention.

Lateral movement of the movable carriage 14 relative to stationary lateral support beam 16 is effected through a rock and pinion gear means consisting of a pinion gear 54 engaging linear rack 26 secured to the top surface of upper flange 20. The rack and pinion gear means is operative through pinion gear 54 being centrally located beneath carriage 14 and engaging raised teeth 28 of rack 26. The pinion gear 54 can be rotated by an external handle 56 operatively secured to a transverse rod 58 passing through a bearing opening 60 in carriage 14 front housing wall and axially secured to circular pinion gear 54. The pinion gear rotation can be hand operated or power operated although hand controlled rotation is preferred. Rotation of pinion gear 54 causes meshing of pinion 54 with rack 26 to effect lateral movement of movable carriage 14 along rack 26 in either lateral direction as desired.

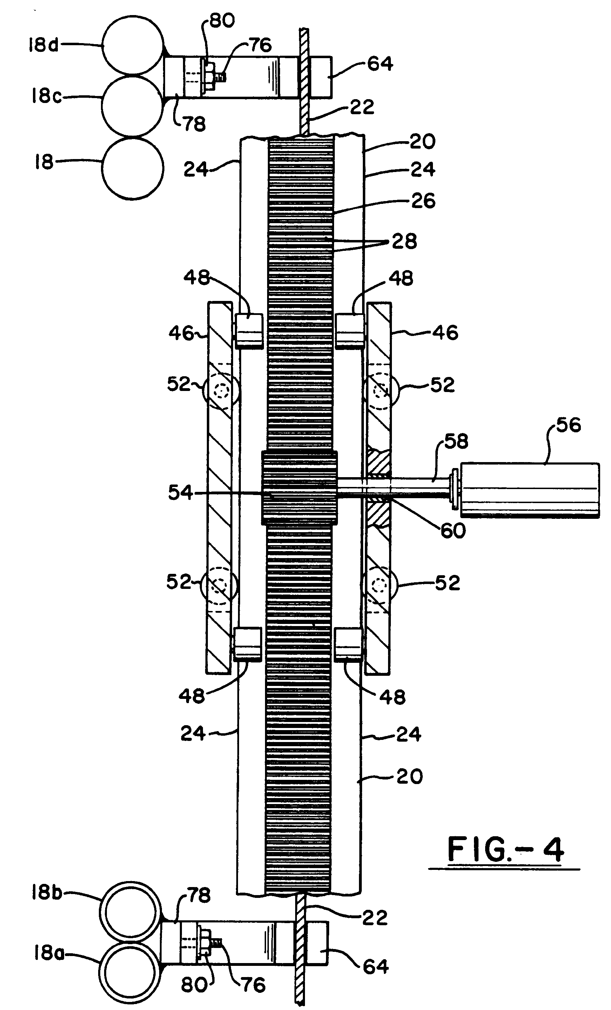

In accordance with the present invention, the movable carriage 14 and cutting means 12 must be securely stabilized as a unit relative to lateral supporting beam 16 which in turn must be securely fastened to a stable structure to obtain strain and vibration-free operation of cutting apparatus 10 so that the cutting disk rotates in a single plane. In this regard, as best viewed in Fig. 2, the lateral support beam 16 is supported by laterally spaced, heavy duty brackets generally indicated by the numeral 62 comprising an upright arm 64 for supporting the lateral support beam 16 and a longitudinal arm 66 adapted to be secured to a permanent structure. The upright arm 64 contains a deep vertical recess 68 adapted to receive and securely hold depending vertical support 22 of T-shaped lateral support beam 16. The longitudinal arm 66 is welded or otherwise secured to a vertical adjustment plate 70. Each vertical adjustment plate 70 preferably contains upper and lower adjustment slots 72 and 74 respectively where each slot comprises a vertical elongated slot adapted to receive a heavy duty adjustment bolt 76 welded to a back plate 78. The back plate 78 in turn is welded or otherwise secured to laterally spaced pairs of boiler tubes 18a,18b, and 18c,18d respectively, as best viewed in Figs. 1 and 4, or to other supporting structure located adjacently to the bank of boiler tubes 18. As best viewed in Figs. 1 and 2, the adjustment plates 70 can be adjusted vertically relative to adjustment bolts 76 extending through upper slot 72 and lower slot 74, whereupon adjustment plate 70 can be locked to back plate 78 by tightening a lock nut 80 on each adjustment bolt 76 in locking engagement with the adjustment plate 70.

In order to operate the boiler tube cutting apparatus 10 of the present invention, the lateral support beam 16 must be first secured in a lateral direction and desirably perpendicular to the axial direction of the bank of boiler tubes 18 to be out so that each boiler tube 18 is cut at a right angle by cutting means 12. In this regard, the rectangular back plates 78 are each tack welded to a pair of laterally spaced boiler tubes identified as 18a,18b and 18c,18d respectively in Fig. 1. The heavy duty adjustment bolts 76 extending outwardly from back plates 78 are fitted into upper and lower slots 72,74 of vertical adjustment plates 70. The adjustment plates 70 are securely locked with locking nuts 80 engaging adjustment plates 70 while being securely tightened on adjustment bolts 76. Ordinarily the support brackets 62 will be pre-welded to the corresponding vertical adjustment plate 70. The lateral support beam 16 is then fitted and secured with upright support brackets 62 by positioning depending vertical support 22 of support beam 16 in recess 68 disposed in the upright arm of each support bracket 62. A final adjustment can be made, if necessary, in respect to adjustment plates 70 to assure horizontal alignment of lateral support beam 16 relative to the axial direction of boiler tubes 18.

The movable carriage 14 containing pinion gear 54 is then fitted to engage lateral support beam 16. The vertically spaced upper bearing wheels 48 and lower bearing wheels 50 are fitted on the upper and lower surfaces respectively of .upper flange 20 of lateral support beam 16 while the side bearings 52 are positioned to engage front and back side edges 24 of the upper flange 20. The pinion gear 54 is adjusted to mesh with rack gear 26 secured to the upper surface of flange 20, whereby movable carriage 14 is operative to move laterally forward or backward as desired by rotating hand crank 56 operatively connected to pinion gear 54. In order to commence cutting of boiler tubes 18, preferably cutting means 12 is rotated slowly from the non-operative position and against the first one or two boiler tubes 18 to create a transverse cut in the initial tubes. Once the cutting means 12 penetrates the initial boiler tubes 18, set pin 40 can be locked in place to lock cutting means 12 in a permanent cutting position for the bank of boiler tubes 18. Lateral movement of carriage 14 and cutting means 12 as a unit can be actuated by rotating hand crank 56 to move carriage 14 and thereby progressively cut through the bank of boiler tubes 18. Upon completion of the cut, the boiler tube cutting apparatus 10 can be dismantled, the tack welds between back plates 78 and supporting boiler tubes 18a, 18b and 18c, 18d can be removed and remaining boiler tubes 18a,18b and 18c, 18d can then be cut and removed by repeating the operation at a vertically upward or lower position.

Although the present invention has been described for use in cutting vertical boiler tubes, it is readily seen that horizontal tubes or other axial directional parallel tubes other than vertical boiler tubes can be readily cut in accordance with the present invention, with the proviso that the cutting apparatus can be operated generally at any angle but preferably at an angle perpendicular to the axial direction of the parallel tubes.

Since the tube cutting apparatus of the present invention has great stability against vibration, strain, free play, slop, and the like, the cutting disk rotates essentially in a single plane. The disk is thus not subjected to rapid bending, flexing, etc. during rotation and thus has a vastly improved operation life.

## Claims

1. A tube cutting apparatus (10) for cutting parallel tubes (18), comprising:
a lateral support beam (16) extending in a lateral direction and adapted to be supported transversely adjacent to the boiler tubes (18), said lateral beam (16) having an upper flange plate (20) and a rack gear (26), said rack gear (26) having raised gear teeth (28),
a moveable carriage (14) supported on said lateral beam (16), said carriage (14) having a pinion gear (54) engaging said rack gear (26), to provide a rack and pinion gear means,
actuating means for activating said rack and pinion gear means to cause lateral movement of said carriage (14) on said lateral support beam (16), and means for cutting tubes mounted on said moveable carriage, characterised in that
said rack gear is secured to said upper flange plate (20) in a lateral direction;
said moveable carriage (14) securely engages said upper flange plate to enable lateral movement of said carriage (14) on said flange plate (20);
and bearing means securely engage said upper flange plate (20), said bearing means comprising a plurality of wheels (48,50), said upper flange plate (20) having upper and lower surfaces whereby said wheels (48,50) respectively engage said upper and lower surfaces of said flange plate (20).

2. The tube cutting apparatus of claim 1, wherein said lateral supporting beam (16) has a T-shape cross-section.

3. The tube cutting apparatus of claim 2, wherein said T-shape beam comprises a longitudinal flange (20) and a depending vertical member (22).

4. The tube cutting apparatus of claim 3, wherein said upper flange plate (20) of said supporting lateral beam (16) has lateral edges (24) on both sides of said upper flange plate (20), and said movable carriage (14) including side stabilizing means (48, 50) for engaging each said lateral edge (24).

5. The tube cutting apparatus of claim 4, wherein each said side stabilizing means (48, 50) comprises side bearings engaging each said lateral edge (24).

6. The tube cutting apparatus of claim 1, wherein said actuating means for activating said rack and pinion gear means comprises a hand operated handle (56).

7. The tube cutting apparatus of claim 1, wherein said cutting means (12) comprises an abrasive wheel.

8. The tube cutting apparatus of claim 1, wherein said cutting means (12) is actuated by pneumatic means.

9. The tube cutting apparatus of claim 8, wherein said cutting means (12) is pivotally adjustable so as to rotate from a non-operative position to an operative position capable of cutting said tubes (18), and including a set pin to lock said pivotal cutting means into a desired rotated position with said movable carriage.

10. The tube cutting apparatus of claim 1, wherein said cutting means (12) is actuated by a pneumatic motor, said apparatus further comprising support means for securing said lateral support beam (16) transversely adjacent to said tubes, wherein said support means for securing said lateral support beam comprises a laterally spaced pair of supporting brackets (62) each comprising an upright arm (64) supporting said lateral support beam (16) and a longitudinal arm (66) for securing said support lateral beam (16) transversely adjacent to said tubes (18), and wherein each said supporting bracket (62) has an upright arm (64) containing a vertical recess (68), and said support lateral beam (16) comprises a T-shape cross-section having a downwardly depending vertical member (22) securely engaged within each recess (68) of each said upright arm (64).

11. The tube cutting apparatus of claim 1, wherein said lateral support beam (16) is horizontally disposed and said upper flange plate (20) has a front side lateral edge and a back side lateral edge, said apparatus further comprising bearing means (52) securely engaging said upper flange plate (20) to ensure planar rotation of said cutting means (12) during cutting of the boiler tubes (18), said carriage (14) having a first side bearing means engaging said front side lateral edge of said upper flange plate and a second side bearing means engaging said back side lateral edge of said upper flange plate (20) to prevent transverse vibrations of said carriage during cutting of the boiler tubes.

12. A tube cutting apparatus according to claim 11, wherein said carriage (14) contains a pneumatic motor, said pneumatic motor operatively connected to said cutting means (12), including support means for securing said lateral support beam (16) transversely adjacent to said tubes, wherein said support means for securing said lateral support beam (16) comprises laterally spaced supporting brackets (62) each comprising an upright arm (64) supporting said lateral support beam (16) and a longitudinal arm (66) for securing said supported lateral beam (16) transversely adjacent to the bank of boiler tubes (18).

13. A tube cutting apparatus according to claim 12, wherein each said upright arm (64) has a vertical recess (68), and said lateral support beam (16) comprises a T-shape cross-section having a downwardly depending vertical member (22) securely engaged within said recess (68) of each said upright arm (64).

## Patentansprüche

1. Rohrschneidevorrichtung (10) zum Schneiden paralleler Rohre (18),
mit einem seitlichen Tragbalken (16), der sich in Seitenrichtung erstreckt und in Querrichtung nahe den Kesselrohren (18) abgestützt ist, wobei der sich in Seitenrichtung erstreckende Balken (16) eine obere Flanschplatte (20) und eine Zahnstange (26) mit hochstehenden Zähnen (28) aufweist,
mit einem auf dem in Seitenrichtung sich erstreckenden Balken (16) abgestützten beweglichen Schlitten (14), der ein Zahnritzel (54) umfaßt und in die Zahnstange (16) zur Bildung einer Zahnstangenanordnung eingreift,
mit Mitteln zur Aktivierung der Zahnstangenanordnung und zur Herbeiführung einer seitlichen Bewegung des Schlittens (14) auf dem sich in Seitenrichtung erstreckenden Tragbalken (16)
und mit auf dem beweglichen Schlitten montierten Mitteln zum Schneiden der Rohre,
**dadurch gekennzeichnet,**
daß die Zahnstange auf der oberen Flanschplatte (20) in Seitenrichtung befestigt ist;
daß der bewegliche Schlitten (14) fest an der oberen Flanschplatte derart angreift, daß eine seitliche Bewegung des Schlittens (14) auf der Flanschplatte (20) möglich ist;
und daß Lagermittel fest an der oberen Flanschplatte (20) angreifen, die mehrere Rollen (48,50) umfassen, wobei die obere Flanschplatte (20) obere und untere Flächen aufweist, so daß die Rollen (48,50) an der oberen bzw. unteren Fläche der Flanschplatte (20) angreifen.

2. Rohrschneidevorrichtung nach Anspruch 1, **dadurch** **gekennzeichnet,** daß der in Seitenrichtung sich erstreckende Tragbalken (16) einen T-förmigen Querschnitt aufweist.

3. Rohrschneidevorrichtung nach Anspruch 2, **dadurch** **gekennzeichnet,** daß der T-förmige Balken einen longitudinalen Flansch (20) und ein nach unten sich erstreckendes vertikales Glied (22) umfaßt.

4. Rohrschneidevorrichtung nach Anspruch 3, **dadurch** **gekennzeichnet,** daß die obere Flanschplatte (20) des in Seitenrichtung sich erstreckenden Tragbalkens (16) auf beiden Seiten Seitenkanten (24) aufweist und der bewegliche Schlitten (14) Seitenstabilisiermittel (48,50) zum Angriff an jeder Seitenkante (24) umfaßt.

5. Rohrschneidevorrichtung nach Anspruch 4, **dadurch** **gekennzeichnet,** daß jedes der Seitenstabilisiermittel (48,50) Seitenlager umfaßt, die an jeder Seitenkante (24) angreifen.

6. Rohrschneidevorrichtung nach Anspruch 1, **dadurch** **gekennzeichnet,** daß die Betätigungsmittel zur Betätigung der Zahnstangenanordnung einen handbetätigten Griff (56) umfassen.

7. Rohrschneidevorrichtung nach Anspruch 1, **dadurch** **gekennzeichnet,** daß das Schneidelement (12) ein abrasives Rad umfaßt.

8. Rohrschneidevorrichtung nach Anspruch 1, **dadurch** **gekennzeichnet,** daß das Schneidelement (12) pneumatisch angetrieben ist.

9. Rohrschneidevorrichtung nach Anspruch 8, **dadurch** **gekennzeichnet,** daß das Schneidelement (12) schwenkverstellbar ist und aus einer Außerbetriebsstellung in eine Betriebsstellung verschwenkbar ist, in der die Rohre (18) geschnitten werden können, und daß ein Fixierstift vorgesehen ist, mittels dessen das verschwenkbare Schneidelement in einer gewünschten Schwenkstellung an dem beweglichen Schlitten verriegelbar ist.

10. Rohrschneidevorrichtung nach Anspruch 1, bei der das Schneidelement (12) pneumatisch angetrieben ist und die Stützmittel zur Festlegung des sich in Seitenrichtung erstreckenden Tragbalkens (16) in Querrichtung nahe den Rohren umfaßt, bei der die Stützmittel zur Festlegung des sich in Seitenrichtung erstreckenden Tragbalkens ein in Seitenrichtung Abstand von einander aufweisendes Paar von Stützwinkeln (62) umfaßt, deren jeder einen aufrechten Arm (64), der den sich in Seitenrichtung erstreckenden Tragbalken (16) unterstützt, und einen longitudinalen Arm (66) zur Festlegung des sich in Seitenrichtung erstreckenden Tragbalkens (16) in Querrichtung nahe den Rohren (18) umfaßt, und bei der jeder der Stützwinkel (62) einen aufrechten Arm (64) mit einer vertikalen Ausnehmung (68) umfaßt und der sich in Seitenrichtung erstreckende Tragbalken (16) einen T-förmigen Querschnitt mit einem sich vertikal nach unten erstreckenden Steg (22) aufweist, der festr in jede Ausnehmung (68) jedes der aufrechten Arme (64) eingreift.

11. Rohrschneidevorrichtung nach Anspruch 1, **dadurch** **gekennzeichnet,** daß der sich in Seitenrichtung erstreckende Tragbalken (16) horizontal angeordnet ist und die obere Flanschplatte (20) eine vordere und eine hintere Seitenkante aufweist, wobei die Vorrichtung weiterhin Lagermittel (52) umfaßt, die fest an der oberen Flanschplatte (20) angreifen, um die ebene Rotation des Schneidelements (12) beim Schneiden der Kesselrohre (18) sicherzustellen, und wobei der Schlitten (14) erste Seitenlagermittel zum Angriff an der vorderen Seitenkante der oberen Flanschplatte und zweite Seitenlagermittel zum Angriff an der hinteren Seitenkante der oberen Flanschplatte (20) umfaßt, um Quervibrationen des Schlittens während des Schneidens der Kesselrohre zu verhindern.

12. Rohrschneidevorrichtung nach Anspruch 11, bei der der Schlitten (14) einen pneumatischen Motor umfaßt, der mit dem Schneidelement (12) wirkungsverbunden ist, und bei der Stützmittel zur Befestigung des sich in Seitenrichtung erstreckenden Tragbalkens (16) in Querrichtung nahe den Rohren vorhanden sind, wobei die Tragmittel zum Festlegen des sich in Seitenrichtung erstreckenden Tragbalkens (16) Seitenabstand aufweisende Tragwinkel (62) umfassen, die jeweils einen aufrechten Arm (64) zum Abstützen des sich in Seitenrichtung erstreckenden Tragbalkens (16) und einen longitudinalen Arm (66) zur Festlegung des sich in Seitenrichtung erstreckenden Tragbalkens (16) in Querrichtung nahe der Reihe der Kesselrohre (18) umfassen.

13. Rohrschneidevorrichtung nach Anspruch 12, bei der der aufrechte Arm (64) eine vertikale Ausnehmung (68) und der sich in Seitenrichtung erstreckende Tragbalken (16) einen T-förmigen Querschnitt aufweisen, der einen sich vertikal nach unten erstreckenden Steg (22) umfaßt, der fest in die Ausnehmung (68) jedes der aufrechten Arme (64) eingreift.

## Revendications

1. Dispositif (10) de découpage de tubes servant à découper des tubes parallèles (18), comprenant :
une barre de support latérale (16) qui s'étend dans une direction latérale et est apte à être supportée transversalement au voisinage des tubes (18) d'une chaudière, ladite barre latérale (16) possédant une plaque supérieure formant bride (20) et une crémaillère (26), ladite crémaillère (26) comportant des dents (28) dirigées vers le haut,
un chariot mobile (14) supporté par ladite barre latérale (16), ledit chariot (14) possédant un pignon (54) engrenant avec ladite crémaillère (26) en formant des moyens à crémaillère et pignon,
des moyens d'actionnement pour activer lesdits moyens à crémaillère et pignon afin de provoquer un déplacement latéral dudit chariot (14) sur ladite barre de support latérale (16), et des moyens pour découper des tubes, montés sur ledit chariot mobile,
caractérisé en ce que
ledit pignon est fixé à ladite plaque supérieure formant bride (20) dans une direction latérale;
ledit chariot mobile (14) engrène fermement avec ladite plaque supérieure, ce qui permet un déplacement latéral dudit chariot (14) sur ladite plaque (20); et
des moyens formant paliers engrènent fermement avec ladite plaque supérieure formant bride (20), les moyens formant paliers comprenant une pluralité de roues (48,50), ladite plaque supérieure formant bride (20) possédant des surfaces supérieure et inférieure, ce qui a pour effet que lesdites roues (48,50) s'appliquent respectivement sur lesdites surfaces supérieure et inférieure de ladite plaque formant bride (20).

2. Dispositif de découpage de tubes selon la revendication 1, dans lequel ladite barre de support latérale (16) possède une section transversale en forme de T.

3. Dispositif de découpage de tubes selon la revendication 2, dans lequel ladite barre en forme de T comprend une bride longitudinale (20) et un élément vertical descendant (22).

4. Dispositif de découpage de tubes selon la revendication 3, dans lequel ladite plaque supérieure formant bride (20) de ladite barre latérale de support (16) possède des bords latéraux (24) sur ses deux côtés, et ledit chariot mobile (14) comprend des moyens de stabilisation latérale (48,50) destinés à s'appliquer contre chacun desdits bords latéraux (24).

5. Dispositif de découpage de tubes selon la revendication 4, dans lequel lesdits moyens (48,50) de stabilisation latérale comprennent des paliers latéraux s'appliquant contre chacun desdits bords latéraux (24).

6. Dispositif de découpage de tubes selon la revendication 1, dans lequel lesdits moyens d'actionnement servant à activer lesdits moyens à crémaillère et pignon comprennent une poignée (56) actionnée manuellement.

7. Dispositif de découpage de tubes selon la revendication 1, dans lequel lesdits moyens de découpage (12) comprennent une meule.

8. Dispositif de découpage de tubes selon la revendication 1, dans lequel lesdits moyens de découpage (12) sont actionnés par des moyens pneumatiques.

9. Dispositif de découpage de tubes selon la revendication 8, dans lequel lesdits moyens de découpage (12) sont réglables avec possibilité de pivotement de manière à pivoter d'une position non active dans une position active, dans laquelle ils sont capables de découper lesdits tubes (18), et comprenant une goupille de positionnement servant à bloquer lesdits moyens de découpage pivotants dans une position en rotation désirée par rapport audit chariot mobile.

10. Dispositif de découpage de tubes selon la revendication 1, dans lequel lesdits moyens de découpage (12) sont actionnés par un moteur pneumatique, ledit dispositif comprenant en outre des moyens de support servant à fixer ladite barre de support latérale (16) transversalement au voisinage desdits tubes, lesdits moyens de support servant à fixer ladite barre de support latérale comprenant un couple de consoles de support (62) espacées latéralement et dont chacune comporte un bras montrant (64) supportant ladite barre de support latérale (16), et un bras longitudinal (66) servant à fixer ladite barre de support latérale (16) transversalement au voisinage desdits tubes (18), et dans lequel chacune desdites consoles de support (62) possède un bras montant (64) contenant un renfoncement vertical (68), et ladite barre de support latérale (16) possède une section transversale en forme de T comportant un élément vertical descendant (22) engrenant de façon fixe dans chaque renfoncement (68) de chacun desdits bras montants (64).

11. Dispositif de découpage de tubes selon la revendication 1, dans lequel ladite barre de support latérale (16) est disposée horizontalement et ladite plaque supérieure formant bride (20) possède un bord latéral avant et un bord latéral arrière, ledit dispositif comprenant en outre des moyens formant palier (52) engrenant de façon fixe avec ladite plaque supérieure formant bride (20) de manière à garantir une rotation dans un plan desdits moyens de coupe (12) pendant le découpage des tubes (18) de la chaudière, ledit chariot (14) possédant des premiers moyens formant paliers latéraux s'engageant contre ledit bord latéral avant de ladite plaque supérieure, et les seconds moyens formant paliers latéraux engrenant avec ledit bord latéral arrière de ladite plaque supérieure formant bride (20) afin d'empêcher des vibrations transversales dudit chariot pendant le découpage des tubes de la chaudière.

12. Dispositif de découpage de tubes selon la revendication 11, dans lequel ledit chariot (14) contient un moteur pneumatique, ledit moteur pneumatique étant raccordé de façon opérationnelle auxdits moyens de découpage (12) et comprenant des moyens de support pour la fixation de ladite barre de support latérale (16) transversalement au voisinage desdits tubes, lesdits moyens de support servant à fixer ladite barre de support latérale (16) comprenant un bras montant (64) supportant ladite barre de support latérale (16) et un bras longitudinal (66) servant à fixer ladite barre latérale supportée (16) transversalement au voisinage de l'ensemble des tubes (18) de la chaudière.

13. Dispositif de découpage de tubes selon la revendication 12, dans lequel chacun desdits bras montants (64) possède un renfoncement vertical (68), et ladite barre de support latérale (16) possède une section transversale en forme de T possédant un élément vertical descendant (22) engrenant de façon fixe dans ledit renfoncement (68) de chacun desdits bras montants (64).
